# EUROPÄISCHE PATENTSCHRIFT

(11) **EP 2 295 770 B1**
(45) Veröffentlichungstag und Bekanntmachung des Hinweises auf die Patenterteilung: **20.03.2013**
(21) Anmeldenummer: 10169990.8
(22) Anmeldetag: 19.07.2010
(51) Int. Cl.: F02D 9/08, F02D 11/10, F02B 27/02, F02B 27/06, F02B 29/08

(54) **Verschlusseinrichtung und Betriebsverfahren**
Throttling device and operating method
Dispositif de fermeture et procédé de fonctionnement

(30) Priorität: 05.08.2009 DE 102009036192
(43) Veröffentlichungstag der Anmeldung: 16.03.2011
(73) Patentinhaber: Mahle International GmbH, 70376 Stuttgart (DE)
(72) Erfinder: Elsässer, Alfred, 75210 Keltern (DE); Helmis, Martin, 73733 Esslingen (DE)
(74) Vertreter: BRP Renaud & Partner

(56) Entgegenhaltungen:
- DE-A1- 3 737 823
- DE-A1- 10 240 913
- DE-A1-102007 047 728
- JP-A- 63 012 827
- US-A- 5 105 784

## Beschreibung

Die vorliegende Erfindung betrifft ein Verfahren zum Betreiben zumindest eines rotierenden Verschlusselements, das in einem Strömungskanal einen durchströmbaren Querschnitt abwechselnd öffnet und sperrt. Die Erfindung betrifft außerdem eine Verschlusseinrichtung zum Steuern eines Strömungskanals, insbesondere eines Kolbenmotors.

Bei einem Kolbenmotor können z. Bsp. in einem Frischluftkanal stromauf von Gaswechselventilen Verschlusseinrichtungen zum Einsatz kommen, mit deren Hilfe der jeweilige Strömungskanal gesteuert werden kann. Die Verschlusseinrichtung kann dabei zumindest ein Verschlusselement, z.B. eine Klappe oder einen Drehschieber, aufweisen, das im Betrieb permanent um eine Rotationsachse rotiert, so genannte rotierendes Verschlusselement. Ein derartiges rotierendes Verschlusselement kann auch als kontinuierlich arbeitendes oder mit gleich bleibendem Drehsinn arbeitendes Verschlusselement bezeichnet werden, was es von einem diskontinuierlich arbeitenden oder oszillierenden Verschlusselement unterscheidet, das im Betrieb abwechselnd zwischen zwei Endstellungen, nämlich einer Offenstellung und einer Schließstellung mit wechselndem Drehsinn umgeschaltet wird.

DE 10 2007 047 728 A1 offenbart ein derartiges Verschlusselement.

Mit Hilfe von rotierenden Verschlusselementen können im Strömungskanal Druckschwingungen erzeugt bzw. vorhandene Druckschwingungen verstärkt werden. Positive Druckamplituden dieser Druckschwingungen lassen sich im Frischluftkanal des Kolbenmotors bspw. zum Erzeugen einer Impulsaufladung nutzen. Negative Druckamplituden dieser Druckschwingungen können bei einer anderen Anwendung zum Einstellen einer Abgasrückführrate genutzt werden. Ebenso ist es grundsätzlich möglich, mit Hilfe eines solchen rotierenden Verschlusselements stromab von Gaswechselventilen in einem Abgaskanal des Kolbenmotors Druckschwingungen zu erzeugen, um über die positiven Druckamplituden die Abgasrückführrate zu beeinflussen. Ferner ist es mit derartigen Verschlusseinrichtungen möglich, andere Parameter bzw. Komponenten des Kolbenmotors zu beeinflussen. Beispielsweise können die mit Hilfe des rotierenden Verschlusselements im Frischluftkanal erzeugten Schwingungen zur Beeinflussung der Schadstoffemission und/oder des Kraftstoffverbrauchs genutzt werden. Ferner kann mit Hilfe der Druckschwingungen das Betriebsverhalten eines Abgasturboladers beeinflusst werden.

Wichtig für solche permanent rotierenden Verschlusselemente ist die Einhaltung bzw. die Einstellung einer Phasenlage relativ zu einer Bezugsgröße, insbesondere eine Bezugszeit oder eine Bezugsfrequenz. Das rotierende Verschlusselement durchläuft eine sich periodisch wiederholende Drehbewegung, deren Bewegung bspw. von 0° bis 360° Drehwinkel verläuft. Bei einem Kolbenmotor ist die Drehbewegung des Verschlusselements z. Bsp. mit der Hubbewegung von Kolben des Kolbenmotors oder mit Schaltzeiten von Ladungswechselventilen synchronisiert. Zwangsläufig ist dadurch auch eine Synchronisation mit der Drehbewegung einer Kurbelwelle des Kolbenmotors vorhanden. Somit kann bspw. die Drehlage oder Drehbewegung der Kurbelwelle als Bezugszeit oder Bezugsgröße für die Phasenlage des rotierenden Verschlusselements herangezogen werden.

Um die Auswirkung der mit Hilfe des rotierenden Verschlusselements erzeugten strömungsdynamischen Vorgänge auf den Betrieb des Kolbenmotors bzw. auf Betriebsparameter des Kolbenmotors, wie z. Bsp. Abgasrückführrate, Kraftstoffverbrauch, Schadstoffemissionen, zu variieren bzw. an sich verändernde Betriebspunkte anzupassen, kann es erforderlich sein, die Phasenlage des rotierenden Verschlusselements relativ zur Bezugsgröße, also insbesondere relativ zum Kurbelwellenwinkel, zu verändern. Beispielsweise kann ein Öffnungszeitpunkt des rotierenden Verschlusselements von +10° Kurbelwellenwinkel um 5° nach früh, also auf +5° Kurbelwellenwinkel oder nach spät, also auf +15° Kurbelwellenwinkel verschoben werden.

Derartige Veränderungen der Phasenlage sollten innerhalb einer möglichst kurzen Zeit erfolgen, um die Adaption der Verschlusseinrichtung an variierende Betriebspunkte des Kolbenmotors möglichst rasch durchführen zu können. Um die Phasenlage des rotierenden Verschlusselements während des Betriebs, also dynamisch anpassen zu können, sind vergleichsweise große Kräfte und/oder Momente erforderlich, was für einen entsprechenden Antrieb mit einem vergleichsweise aufwendigen Steuerungs- bzw. Regelungsbedarf verbunden ist.

Die vorliegende Erfindung beschäftigt sich mit dem Problem, für eine Verschlusseinrichtung der eingangs genannten Art bzw. für ein zugehöriges Betriebsverfahren eine verbesserte Ausführungsform anzugeben, die sich insbesondere dadurch auszeichnet, dass das Verändern der Phasenlage des rotierenden Verschlusselements vereinfacht ist. Insbesondere sollen der zum Verändern der Phasenlage erforderliche Energieaufwand und die zur Veränderung notwendige Zeit reduziert werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zum vorübergehenden Beschleunigen oder Abbremsen des Verschlusselements Strömungskräfte und/oder Strömungsmomente gezielt auszunutzen, die im Betrieb am Verschlusselement ohnehin angreifen. Die Erfindung nutzt hierbei die Erkenntnis, dass am rotierenden Verschlusselement vom Drehwinkel abhängige Kräfte bzw. Momente angreifen. Insbesondere muss das rotierende Verschlusselement in bestimmten Drehwinkelphasen gegen Strömungskräfte angetrieben werden, während es in anderen Drehwinkelbereichen durch die Strömungskräfte angetrieben ist. Diese während der Drehbewegung stark variierenden Kräfte bzw. Momente am Verschlusselement erschweren bei einer herkömmlichen Vorgehensweise die Einhaltung einer kontinuierlichen Drehbewegung für das Verschlusselement, wenn dieses bspw. mittels eines Elektromotors angetrieben ist. Durch die Ausnutzung dieser ohnehin vorhandenen Kräfte lässt sich das Verschlusselement gezielt beschleunigen bzw. gezielt abbremsen, um die gewünschte Veränderung der Phasenlage zu realisieren. Hierdurch wird der Energieaufwand zum Verändern der Phasenlage erheblich reduziert. Außerdem kann die Phasenadaption in kürzerer Zeit realisiert werden. Da ein Kolbenmotor, insbesondere bei einer Verwendung in einem Kraftfahrzeug, häufig seinen Betriebspunkt ändert, wirkt sich die hier vorgeschlagene Vorgehensweise signifikant auf den Energieverbrauch und in der Folge auch auf die Lebensdauer der Verschlusseinrichtung sowie deren Elektronik aus.

Gemäß einer vorteilhaften Ausführungsform kann das Einhalten einer gewünschten Phasenlage dadurch realisiert werden, dass nur in wenigstens einem vorbestimmten Drehwinkelbereich des Verschlusselements eine Regelung der Drehlage bzw. des Drehwinkels, also eine Positionsregelung durchgeführt wird. Im Übrigen wird dann eine Regelung der Drehgeschwindigkeit, also eine Geschwindigkeitsregelung durchgeführt. Das bedeutet, dass nur in dem wenigstens einen vorbestimmten Drehwinkelbereich durch Regeln der Phasenlage ein Soll-Ist-Vergleich der Phasenlage durchgeführt wird und bei entsprechender Abweichung eine Korrektur der Phasenlage erfolgt, während im verbleibenden Drehwinkelbereich nur die Drehzahl geregelt wird, die passend zur Bezugsgröße gewählt ist. Insoweit wird während dieses verbleibenden Drehwinkelbereichs die Position, also die Drehlage des Verschlusselements gesteuert, so dass eine Positionssteuerung vorliegt. Beispielsweise kann hierfür ein Elektromotor zum Antreiben des Verschlusselements mit einem vorgewählten Bestromungsmuster beaufschlagt werden, das einen zeitlichen Verlauf der Amplitude sowie eine Frequenz der Bestromung umfassen kann. Die vorgeschlagene Vorgehensweise reduziert den Regelungsbedarf und den damit einhergehenden Energieverbrauch. Dieser Vorschlag nutzt die Erkenntnis, dass die durch eine Steuerung möglicherweise auftretende Soll-Ist-Abweichung durch eine Regelungsphase, die nur in einem vorbestimmten Drehwinkelbereich erfolgt, ausgeglichen bzw. korrigiert werden kann. Desweiteren nutzt diese Vorgehensweise die Erkenntnis, dass die am Verschlusselement angreifenden, stark wechselnden Strömungskräfte bzw. Strömungsmomente während einer vollständigen Umdrehung einen extrem hohen Regelungsbedarf erzeugen, wenn die Position des Verschlusselements über dessen gesamten Drehwinkelbereich auf einen festen Phasenwinkelbezug zum Kolbenmotor geregelt werden soll. Wenn die Drehbewegung des Verschlusselements dagegen in Drehwinkelbereichen, in denen die stark variierenden Strömungskräfte auftreten, nur hinsichtlich der Drehgeschwindigkeit geregelt wird, kommt es zu keinen oder nur zu kleinen Regelungseingriffen, was den Energieverbrauch eines entsprechenden Verschlusselementantriebs erheblich reduziert.

Bei einer alternativen Ausführungsform kann das Einhalten einer gewünschten Ist-Phasenlage über den gesamten Drehwinkelbereich des Verschlusselements durch eine Regelung erfolgen, wobei eine Soll-Phasenlage abhängig von den am Verschlusselement angreifenden Strömungskräften und/oder Strömungsmomenten und/oder abhängig von der Drehwinkellage des Verschlusselements moduliert bzw. variiert wird. Die Modulation des Sollwerts der einzuhaltenden Phasenlage über den Drehwinkelbereich des Verschlusselements berücksichtigt die vom Drehwinkel des Verschlusselements abhängigen, daran angreifenden Kräfte bzw. Momente und ermöglicht dadurch eine energiesparende Regelung zum Einstellen einer gewünschten Drehbewegung für das Verschlusselement.

Bei einer weiteren alternativen Ausführungsform kann das Einhalten einer gewünschten Ist-Phasenlage über den gesamten Drehwinkelbereich des Verschlusselements ebenfalls durch eine Regelung erfolgen, wobei ein Bereich zulässiger Abweichungen der Ist-Phasenlage von der Soll-Phasenlage abhängig von den am Verschlusselement angreifenden Strömungskräften und/oder Strömungsmomenten und/oder abhängig von der Drehwinkellage des Verschlusselements moduliert bzw. variiert wird. Die Modulation des Bereichs zulässiger Ist-Soll-Abweichungen bei der einzuhaltenden Phasenlage über den Drehwinkelbereich des Verschlusselements berücksichtigt die vom Drehwinkel des Verschlusselements abhängigen, daran angreifenden Kräfte bzw. Momente und ermöglicht dadurch eine energiesparende Regelung zum Einstellen einer gewünschten Drehbewegung für das Verschlusselement. Denn solange die auftretende Abweichung zwischen Ist-Phasenlage und Soll-Phasenlage innerhalb dieses Zulässigkeitsbereichs bleibt, kommt es zu keinem Regeleingriff.

Bei einer anderen alternativen Ausführungsform kann das Einhalten einer gewünschten Ist-Phasenlage über den gesamten Drehwinkelbereich des Verschlusselements ebenfalls durch eine Regelung erfolgen, wobei Parameter der Regelung (Regelparameter) und/oder Parameter des jeweils verwendeten Reglers (Reglerparameter) abhängig von den am Verschlusselement angreifenden Strömungskräften und/oder Strömungsmomenten und/oder abhängig von der Drehwinkellage des Verschlusselements moduliert bzw. variiert werden. Die Modulation der Regelparameter und/oder der Reglerparameter über den Drehwinkelbereich des Verschlusselements berücksichtigt die vom Drehwinkel des Verschlusselements abhängigen, daran angreifenden Kräfte bzw. Momente und ermöglicht dadurch eine energiesparende Regelung zum Einstellen einer gewünschten Drehbewegung für das Verschlusselement. Solange es im Verlauf der Bewegung des Verschlusselements nicht auf eine genaue Einhaltung der Soll-Phasenlage ankommt, können bei auftretenden Abweichungen zwischen Ist-Phasenlage und Soll-Phasenlage die Regel- und/oder Reglerparameter abgeschwächt werden, so dass es nur zu einem reduzierten Regeleingriff mit reduziertem Energieverbrauch kommt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Kolbenmotors,
- Fig. 2: eine stark vereinfachte, teilweise geschnittene perspektivische Darstellung einer Verschlusseinrichtung mit zwei Verschlusselementen,
- Fig. 3: eine Ansicht wie in Fig. 2, jedoch bei einer Ausführungsform der Verschlusseinrichtung mit nur einem einzigen Verschlusselement,
- Fig. 4: ein stark vereinfachtes Diagramm zur Veranschaulichung einer Phasenverschiebung zwischen einem Verschlusselement und einer Kurbelwelle,
- Fig. 5: ein stark vereinfachtes Diagramm zur Veranschaulichung eines Zusammenhangs zwischen einer Phasenlage des Verschlusselements zu einer Kurbelwelle und den daran angreifenden Momenten,
- Fig. 6: ein stark vereinfachtes Diagramm zur Veranschaulichung einer Veränderung einer Phasenlage des Verschlusselements relativ zu einer Bezugsgröße,
- Fig. 7: ein vereinfachter Querschnitt eines Verschlusselements im Strömungskanal ohne Vertiefung,
- Fig. 8: ein vereinfachter Querschnitt eines Verschlusselements im Strömungskanal mit Vertiefung,
- Fig. 9: ein stark vereinfachtes Diagramm zur Veranschaulichung der Steuerfunktion des Verschlusselements ohne Vertiefung im Strömungskanal,
- Fig. 10: ein Diagramm wie in Fig. 9, jedoch für ein Verschlusselement mit Vertiefung im Strömungskanal.

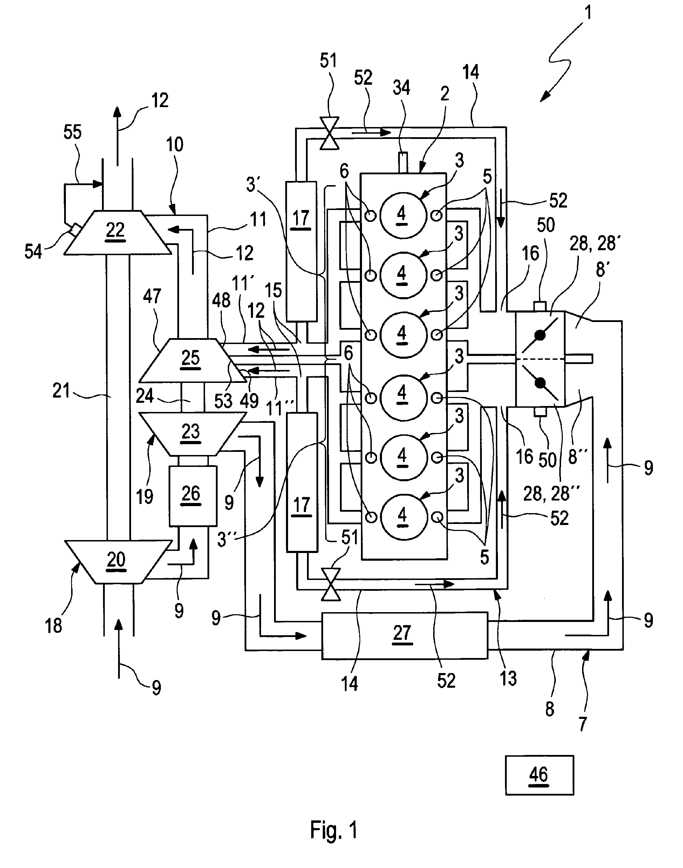

Entsprechend Fig. 1 umfasst ein Kolbenmotor 1, wie er bei Kraftfahrzeugen zur Anwendung kommen kann, z. B. einen Motorblock 2, der mehrere Zylinder 3 enthält, die jeweils einen Brennraum 4 umschließen und in denen ein nicht näher bezeichneter Kolben hubverstellbar angeordnet ist. Im Beispiel sind rein exemplarisch und ohne Beschränkung der Allgemeinheit genau sechs derartige Zylinder 3 in Reihe angeordnet. Jedem Brennraum 4 sind Gaswechselventile, nämlich Einlassventile 5 und Auslassventile 6 zugeordnet, die im Motorblock 2 angeordnet sind. Im Beispiel sind je Brennraum 4 ein Einlassventil 5 und ein Auslassventil 6 vorgesehen. Es ist klar, dass auch zwei oder mehr Einlassventile 5 bzw. zwei oder mehr Auslassventile 6 vorgesehen sein können. Der Kolbenmotor 1 dient bevorzugt zur Verwendung als Fahrzeugantrieb für Nutzfahrzeuge und Personenkraftwagen, und zwar beispielsweise in schweren Nutzfahrzeugen, wie z. B. Baustellenfahrzeugen und Off-Road-Fahrzeugen.

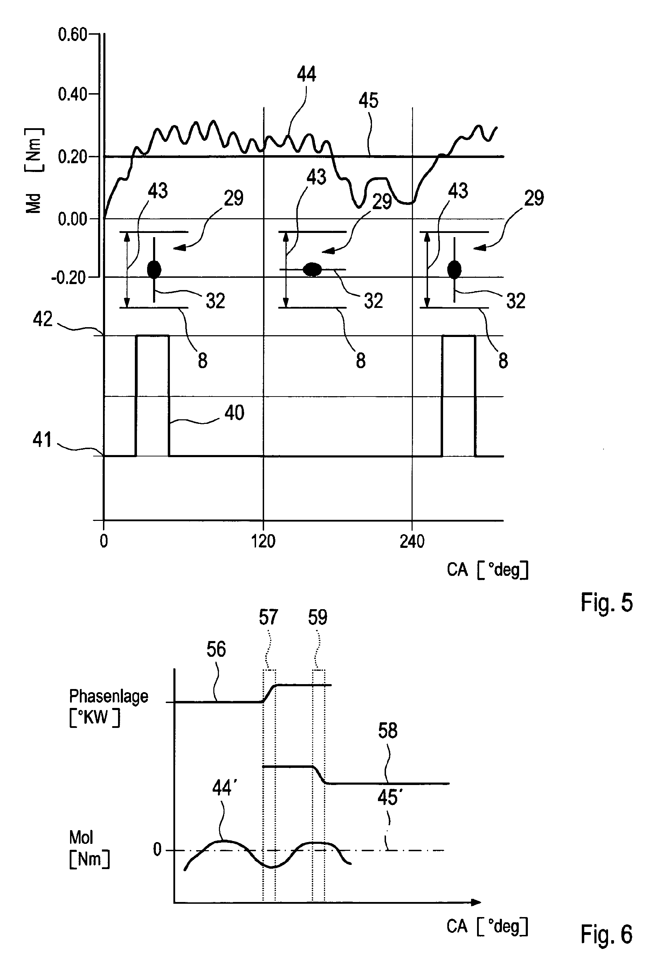

Beim Kolbenmotor 1 sind zwei Zylindergruppen ausgebildet, nämlich eine erste Zylindergruppe 3' und eine zweite Zylindergruppe 3", die in Fig. 1 durch geschweifte Klammern markiert sind und in den Diagrammen der Fig. 6 bis 8 mit 1 - 3 für die Zylinder 3 der ersten Gruppe 3' und mit 4 - 6 für die Zylinder 3 der zweiten Gruppe 3" angedeutet sind. Jede Zylindergruppe 3', 3" enthält dabei zumindest einen Zylinder 3. Im Beispiel enthält jede Zylindergruppe 3', 3" drei Zylinder 3, also eine symmetrische Aufteilung der sechs Zylinder 3 auf die beiden Zylindergruppen 3', 3". Grundsätzlich können auch mehr als zwei Zylindergruppen vorhanden sein. Grundsätzlich kann jede Zylindergruppe 3', 3" auch mehr oder weniger als drei Zylinder 3 umfassen.

Der Kolbenmotor 1 weist eine Frischluftanlage 7 auf, die zur Zuführung von Frischluft zu den Brennräumen 4 dient. Hierzu weist die Frischluftanlage 7 eine Frischluftleitung 8 auf, die einen Frischluftpfad 9 enthält, der in Fig. 1 durch Pfeile angedeutet ist. Außerdem ist der Kolbenmotor 1 mit einer Abgasanlage 10 ausgestattet, die dazu dient, Abgas von den Brennräumen 4 wegzuführen. Sie besitzt hierzu eine Abgasleitung 11, die einen Abgaspfad 12 enthält, der durch Pfeile angedeutet ist. Außerdem ist der Kolbenmotor 1 mit einer Abgasrückführanlage 13 ausgestattet, mit der es möglich ist, Abgas von der Abgasanlage 10 zur Frischluftanlage 7 zurückzuführen. Hierzu besitzt die Abgasrückführanlage 13 zumindest eine Rückführleitung 14. Im Beispiel sind zwei derartige Rückführleitungen 14 vorgesehen. Jede Rückführleitung 14 führt von einer Entnahmestelle oder Abzweigstelle 15 zu einer Einleitstelle 16. An der jeweiligen Abzweigstelle 15 ist die jeweilige Rückführleitung 14 eingangsseitig mit der Abgasleitung 11 verbunden. An der jeweiligen Einleitstelle 16 ist die jeweilige Rückführleitung 14 mit der Frischluftleitung 8 verbunden.

Im Beispiel ist die Frischluftanlage 7 zumindest in einem an die Brennräume 4 anschließenden Abschnitt zweiflutig ausgestaltet, sodass die Frischluftleitung 8 in diesem Bereich eine erste Flut 8' zur Versorgung der ersten drei Brennräume 4 und eine zweite Flut 8" aufweist, die zur Versorgung der zweiten drei Brennräume 4 dient. Die erste Frischluftflut 8' dient dabei zur Frischluftversorgung der Zylinder 3 der ersten Zylindergruppe 3', während die zweite Frischluftflut 8' zur Frischluftversorgung der Zylinder 3 der zweiten Zylindergruppe 3" vorgesehen ist. Analog dazu ist auch die Abgasanlage 10 zumindest in einem an die Brennräume 4 anschließenden Abschnitt zweiflutig ausgestaltet, sodass die Abgasleitung 11 zumindest in einem an die Brennräume 4 anschließenden Abschnitt eine den Zylindern 3 der ersten Zylindergruppe 3' zugeordnete erste Flut 11' und eine den Zylindern 3 der zweiten Zylindergruppe 3" zugeordnete zweite Flut 11" aufweist. Die beiden Abgasrückführleitungen 14 sind dementsprechend jeweils einer dieser Fluten 8', 8" bzw. 11', 11" zugeordnet. Im Beispiel enthält jede Rückführleitung 14 einen Abgasrückführkühler 17.

Ferner ist der Kolbenmotor 1 im dargestellten Beispiel aufgeladen, sodass zumindest eine Ladeeinrichtung vorgesehen ist. Im Beispiel sind zwei Ladeeinrichtungen vorgesehen, nämlich eine erste Ladeeinrichtung 18 und eine zweite Ladeeinrichtung 19. Beide Ladeeinrichtungen 18, 19 sind im Beispiel als Abgasturbolader ausgestaltet. Dementsprechend umfasst die erste Ladeeinrichtung 18 einen ersten Verdichter 20, der in der Frischluftleitung 8 angeordnet ist und der über eine erste Antriebswelle 21 mit einer ersten Turbine 22 antriebsverbunden ist, die in der Abgasleitung 11 angeordnet ist. Die zweite Ladeeinrichtung 19 umfasst dementsprechend einen zweiten Verdichter 23, der in der Frischluftleitung 8 angeordnet ist und über eine zweite Antriebswelle 24 mit einer zweiten Turbine 25 antriebsverbunden ist, die in der Abgasleitung 11 angeordnet ist. Dabei ist der zweite Verdichter 23 stromab des ersten Verdichters 20 angeordnet, während die zweite Turbine 25 stromauf der ersten Turbine 22 angeordnet ist. Zwischen dem ersten Verdichter 20 und dem zweiten Verdichter 23 kann ein erster Ladeluftkühler 26 in der Frischluftleitung 8 angeordnet sein. Zwischen dem zweiten Verdichter 23 und den Brennräumen 4 kann ein zweiter Ladeluftkühler 27 in der Frischluftleitung 8 angeordnet sein.

Der Kolbenmotor 1 ist außerdem mit wenigstens einem Zusatzventil 28 ausgestattet. Im Beispiel der Fig. 1 sind zwei derartige Zusatzventile 28 vorgesehen, nämlich ein erstes Zusatzventil 28' und ein zweites Zusatzventil 28". Das jeweilige Zusatzventil 28 ist in der Frischluftanlage 7 stromauf der Einlassventile 5 angeordnet. Im Beispiel ist in den beiden Fluten 8',8" jeweils ein derartiges Zusatzventil 28 angeordnet. Das erste Zusatzventil 28' ist in der ersten Frischluftflut 8' angeordnet, während das zweite Zusatzventil 28" in der zweiten Frischluftflut 8" angeordnet ist. Jedes Zusatzventil 28 ist dadurch drei Brennräumen 4 zugeordnet.

Um das Beschleunigungsvermögen des Kolbenmotors 1 steigern zu können, kann die Abgasrückführanlage 13 entsprechend Fig. 1 mit wenigstens einem Sperrventil 51 ausgestattet sein, mit dessen Hilfe ein in der jeweiligen Rückführleitung 14 geführter, durch Pfeile angedeuteter Rückführpfad 52 gesperrt werden kann. Da somit kein Massenstrom zu den Brennräumen 4 über die Abgasrückführung erfolgt, steht mehr Luft zur Verfügung.

Zumindest eine der Turbinen 22, 25, kann entsprechend Fig. 1 variabel ausgestaltet sein. Dabei sind Turbinen mit Wastegate 54 oder mit variabler Turbinengeometrie 53 einsetzbar. Im Beispiel ist nur die zweite Turbine 25 mit einer solchen variablen Turbinengeometrie 53 ausgestattet. Die variable Turbinengeometrie 53 ermöglicht eine Veränderung des Einströmquerschnitts der jeweiligen Turbine 25. Auf diese Weise kann zum einen bei einem reduzierten Abgasmassenstrom die jeweilige Turbine 25 auf einer erhöhten Drehzahl gehalten werden, um so im Falle einer Lastanforderung das sog. Turboloch, also die Reaktionszeit des Abgasturboladers 19 zu reduzieren. Zum anderen kann mit Hilfe der variablen Turbinengeometrie 53 der Staudruck im Abgas stromauf der jeweiligen Turbine 25 vergrößert werden, wodurch das Druckgefälle zwischen Abzweigstelle 15 und Einleitstelle 16 für die Effektivität der Abgasrückführanlage 13 erhöht werden kann. Hierbei steigt jedoch der Abgasgegendruck, gegen den der Kolbenmotor 1 arbeitet. In der Folge nimmt bei gleicher Motorlast der Kraftstoffverbrauch zu.

In Betriebspunkten mit reduzierter Last und/oder mit reduzierter Drehzahl kann die variable Turbinengeometrie 53 zum Einstellen eines vergleichsweise großen Einströmquerschnitts betätigt werden. In der Folge nimmt der Abgasgegendruck ab. Eine damit üblicherweise einhergehende Reduzierung der Abgasrückführrate kann durch eine entsprechende Phasenlage des jeweiligen Zusatzventils 28 entsprechend Fig. 5 ausgeglichen werden. In der Folge kann im jeweiligen Betriebspunkt eine hinreichend große Abgasrückführrate auch ohne Gegendruckerhöhung über die variable Turbinengeometrie 53 realisiert werden. Somit kann der Kraftstoffverbrauch der Brennkraftmaschine 1 gesenkt werden.

Für Turbinen mit Wastegate 54 gelten analoge Zusammenhänge, da der durch das Wastegate 54 beeinflusste Abgasgegendruck die Abgasrückführrate steuert bzw. beeinflusst. In Fig. 1 ist exemplarisch die erste Turbine 22 mit einem Wastegate 54 zum Steuern eines die Turbine 22 zumindest teilweise umgehenden Bypasses 55 ausgestattet. Durch Schließen des Wastegates 54 steigt der Abgasdruck und die Abgasrückführrate nimmt zu.

Bei einer aufgeladenen Brennkraftmaschine 1, die in der Abgasanlage 10 zumindest eine Turbine 22 aufweist, die mit einem Wastegate 54 zum Steuern eines die Turbine 22 zumindest teilweise umgehenden Bypasses 55 ausgestattet ist, kann in Betriebspunkten mit reduzierter Last und/oder Drehzahl das jeweilige Wastegate 54 so betätigt werden, dass sich ein relativ großer Strömungsquerschnitt für den Bypass 55 einstellt, während das wenigstens eine Zusatzventil 28 so betätigt wird, dass sich die gewünschte Abgasrückführrate einstellt.

Eine der Turbinen 22, 25, hier die stromauf angeordnete zweite Turbine 25 kann bei einer anderen Ausführungsform als Zwillingsturbine 47 ausgestaltet sein und einen ersten Einlass 48 sowie einen zweiten Einlass 49 aufweisen. An den ersten Einlass 48 ist die erste Abgasflut 11' angeschlossen, während an den zweiten Einlass 49 die zweite Abgasflut 11" angeschlossen ist. Somit ist letztlich die erste Zylindergruppe 3' einer nicht gezeigten ersten Teilturbine der Zwillingsturbine 47 zugeordnet, während die zweite Zylindergruppe 3" einer nicht gezeigten zweiten Teilturbine der Zwillingsturbine 47 zugeordnet ist.

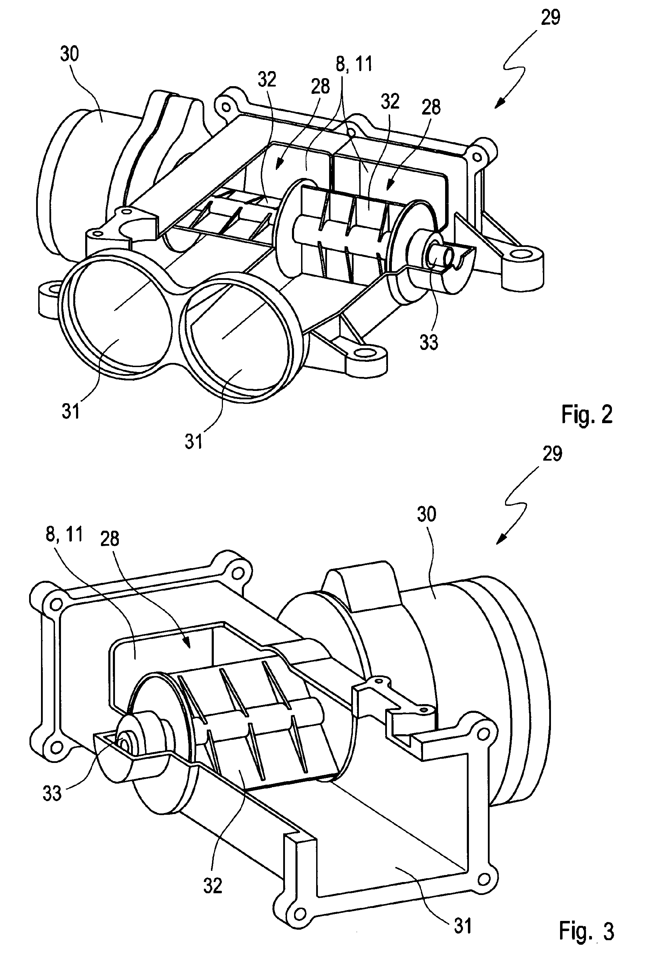

Fig. 2 zeigt ein Beispiel für eine Verschlusseinrichtung 29, die zwei Zusatzventile 28 aufweist, die über einen gemeinsamen Antrieb 30 betätigt werden können. Erkennbar umfasst die Verschlusseinrichtung 29 zwei gasdicht voneinander getrennte Leitungsabschnitte 31, mit denen die Verschlusseinrichtung 29 in die beiden Fluten 8',8" der Frischluftanlage 7 eingebunden werden kann. Das jeweilige Zusatzventil 28 enthält im jeweils zugeordneten Kanalabschnitt 31 ein Verschlusselement 32, bei dem es sich in den hier gezeigten Ausführungsformen um eine Klappe handelt, die ebenfalls mit 32 bezeichnet werden kann. Alternativ kann es sich beim Verschlusselement 32 auch um eine andere Ausführungsform handeln, z.B. um einen Drehschieber. Das als Klappe ausgestaltete Verschlusselement 32 kann insbesondere auch als Schmetterlingsklappe bezeichnet werden. Die Verschlusselemente 32 bzw. die Klappen 32 sind drehfest auf einer gemeinsamen Welle 33 angeordnet, die mit dem Antrieb 30 antriebsverbunden ist. Der Antrieb 30 ist dazu ausgestaltet, die Verschlusselemente 32 rotieren zu lassen, so dass es sich hier um rotierende Verschlusselemente 32 handelt. Die Drehzahl des Antriebs 30 bzw. der Verschlusselemente 32 kann beispielsweise ¾ der Drehzahl einer in Fig. 1 angedeuteten Kurbelwelle 34 des Kolbenmotors 1 entsprechen. Bei anderen Zylinderzahlen und anderer Motorbauweise (Reihenmotor, V-Motor, W-Motor, Boxermotor) können auch andere Korrelationen zwischen den Drehzahlen des jeweiligen Verschlusselements 32 und der Kurbelwelle 34 auftreten. Vorzugsweise kann die Verschlusseinrichtung 29 zwei separate Antriebe 30 für die beiden Verschlusselemente 32 aufweisen, so dass diese unabhängig voneinander betrieben werden können.

Fig. 3 zeigt eine weitere Ausführungsform einer derartigen Verschlusseinrichtung 29, die abweichend von der in Fig. 2 gezeigten Ausführungsform nur ein einziges Zusatzventil 28 aufweist. Dementsprechend umfasst diese Ausführungsform auch nur einen Kanalabschnitt 31 und ein Verschlusselement 32, das im Kanalabschnitt 31 angeordnet ist und mit dem Antrieb 30 über die Welle 33 antriebsverbunden ist. Vorzugsweise sind zum Steuern der beiden Fluten 8', 8" zwei derartige Verschlusseinrichtungen 29 vorhanden, die unabhängig voneinander betätigt werden können.

Die in den Figuren 2 und 3 gezeigten Ausführungsformen veranschaulichen Beispiele für geeignete Zusatzventile 28, die bei ihrer Betätigung den jeweiligen Frischluftpfad 9 abwechselnd öffnen und sperren können. Dabei rotiert das jeweilige Verschlusselement 32 im Betrieb des Kolbenmotors 1, wobei es mit jeder vollständigen Umdrehung zweimal eine Schließstellung durchfährt, während sie zwischen zwei aufeinander folgenden Schließstellungen offen ist. Der zeitliche Abstand zwischen zwei aufeinander folgenden Schließstellungen oder Schließphasen definiert eine Schaltfrequenz des jeweiligen Zusatzventils 28. Zweckmäßig ist das jeweilige Zusatzventil 28 synchron zur Kurbelwelle 34 betätigt, sodass zumindest bei einer stationären Betätigung des jeweiligen Zusatzventils 28 eine konstante Korrelation zwischen der Drehzahl der Kurbelwelle 34 und der Schaltfrequenz des jeweiligen Zusatzventils 28 vorliegt. Beispielsweise rotiert das Verschlusselement 32 mit der gleichen oder mit der doppelten oder mit der dreifachen Drehzahl der Kurbelwelle 34.

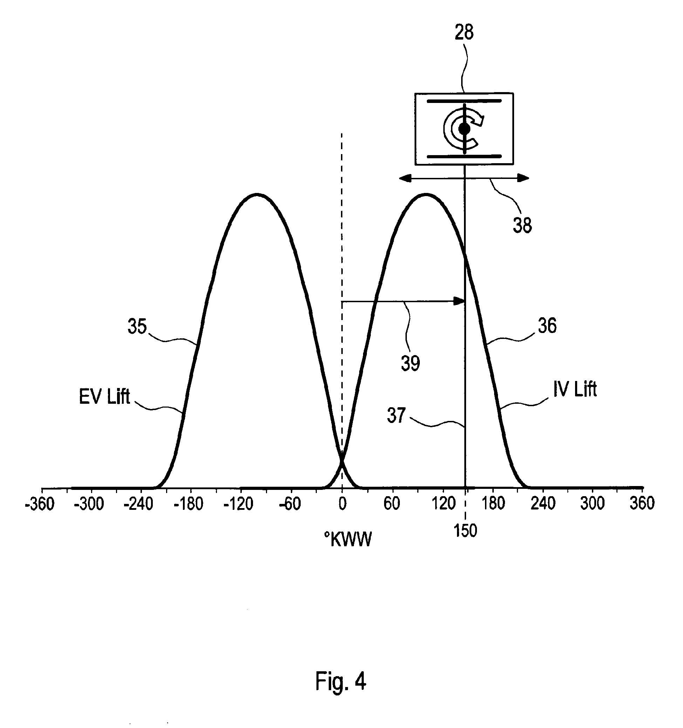

Die vorstehend genannte Korrelation zwischen Kurbelwelle 34 und Zusatzventil 28 bzw. Verschlusselement 32 wird mit Bezug auf das Diagramm der Fig. 4 näher erläutert. In diesem Diagramm zeigt die Abszisse den Kurbelwellenwinkel in Winkelgraden, kurz °KWW. Die Ordinate zeigt den Hub der Gaswechselventile 5, 6. In das Diagramm sind eingetragen eine Auslassventilerhebungskurve 35 sowie eine Einlassventilerhebungskurve 36. Die beiden Erhebungskurven 35,36 überschneiden sich in einem kleinen Bereich. Der zugehörige Schnittpunkt ist gezielt bei 0° KWW angeordnet und entspricht im Übrigen einem oberen Totpunkt einer Kolbenbewegung des dem betrachteten Brennraum 4 zugeordneten Kolbens.

Ferner enthält das Diagramm der Fig. 4 in Form einer vertikalen Linie einen Schließzeitpunkt 37 des dem betrachteten Brennraum 4 zugeordneten Zusatzventils 28, das in Fig. 4 ebenfalls zur Veranschaulichung symbolisch dargestellt ist. Dieser Schließzeitpunkt 37 befindet sich bei einer stationären Betätigung des Zusatzventils 28 immer in der gleichen Relation zur Kurbelwelle 34, steht also stets beim gleichen Kurbelwellenwinkel. Im Beispiel befindet sich der Schließzeitpunkt 37 bei etwa 150° KWW. Die relative Lage des Schließzeitpunkts 37 relativ zum Kurbelwellenwinkel der Kurbelwelle 34 definiert eine Phasenlage zwischen dem Zusatzventil 28 bzw. dem zugehörigen rotierenden Verschlusselement 32 und einer durch die relative Drehlage der Kurbelwelle 34 definierten Bezugsgröße. Diese Bezugsgröße ist insbesondere eine Bezugszeit oder eine Bezugsfrequenz oder Bezugsdrehzahl. Entsprechend einem Doppelpfeil 38 ist diese Phasenlage verstellbar. Der Schließzeitpunkt 37, also die Phasenlage des Verschlusselements 32 ist relativ zur Bezugsgröße, also relativ zur Drehlage der Kurbelwelle 34 sowohl in Richtung kleinerer Kurbelwellenwinkel als auch in Richtung größerer Kurbelwellenwinkel verstellbar, um so die Phasenlage zwischen Zusatzventil 28 und Kurbelwelle 34 bzw. zwischen Verschlusselement 32 und Bezugsgröße zu verändern. Ein Pfeil 39 deutet an, dass der Schließzeitpunkt 37 bspw. von einer Ausgangsphasenlage, bei welcher der Schließzeitpunkt 37 bei 0° KWW liegt, also deckungsgleich zur Ordinate verläuft, bis zur gezeigten Position verschiebbar ist, bei welcher der Schließzeitpunkt 37 bei etwa 150° KWW liegt. Es ist klar, dass grundsätzlich auch größere Kurbelwellenwinkel für den Schließzeitpunkt 37 einstellbar sind, z. B. kann eine Verstellbarkeit bis 240° KWW vorgesehen sein.

Im Diagramm der Fig. 5 repräsentiert die Ordinate ein am jeweiligen Verschlusselement 32 angreifendes Strömungsmoment Md während die Abszisse den Kurbelwellenwinkel CA wiedergibt. Eine Kurve 40 deutet die Steuerbewegung des Verschlusselements 32 im jeweiligen Strömungskanal an. Bei der Position 41 ist das Verschlusselement 32 geöffnet, während es bei der Position 42 geschlossen ist. Mit anderen Worten, verläuft die Kurve 40 entlang der Position 41, gibt das Verschlusselement 32 den durchströmbaren Querschnitt des zugehörigen Strömungskanals mehr oder weniger frei. Verläuft die Kurve 40 entlang der Position 42, sperrt das Verschlusselement 32 den durchströmbaren Querschnitt des jeweiligen Strömungskanals. Im Diagramm der Fig. 5 sind symbolisch drei Verschlusseinrichtungen 29 angedeutet, um die zugehörigen Stellungen des Verschlusselements 32 zu symbolisieren. Der mit Hilfe des Verschlusselements 32 steuerbare durchströmbare Querschnitt ist dabei mit 43 bezeichnet. Der Strömungskanal ist bspw. durch den Frischluftkanal 8 bzw. durch eine seiner Fluten 8', 8" gebildet. Alternativ kann es sich beim Strömungskanal bei einer anderen Ausführungsform auch um den Abgaskanal 11 bzw. um eine seiner Fluten 11', 11" handeln. Ebenso ist eine Ausführungsform möglich, bei welcher der Strömungskanal durch einen der Rückführkanäle 14 gebildet ist. Ebenso sind beliebige Kombinationen der vorstehenden Varianten denkbar.

Eine Kurve 44 gibt den Verlauf eines zum Antreiben des Verschlusselements 32 daran angreifenden Antriebsmoments abhängig von der Drehlage des Verschlusselements 32 an. Erkennbar schwanken die am Verschlusselement 32 angreifenden Antriebsmomente um ein mittleres Moment 45, so dass bezogen auf das mittlere Moment 45 größere Momente sowie kleinere Momente auftreten. Im Beispiel der Fig. 5 besitzt das mittlere Moment 45 einen positiven Wert. Bei anderen Ausführungsformen kann das mittlere Moment 45 auch neutral sein, also den Wert 0 aufweisen. Insbesondere dann können auch negative Momente am Verschlusselement 32 angreifen.

Die in Fig. 5 auf der Ordinate aufgetragenen Momente sind wie erläutert die vom Verschlusselementantrieb 30 aufzubringenden Antriebsmomente, die erforderlich sind, um die am Verschlusselement 32 angreifenden Strömungsmomente auszugleichen. Positive Momente der Kurve 44, die oberhalb des mittleren Moments 45 liegen, entstehen somit bei stärker bremsenden Strömungsmomenten, die aufgrund der Strömung am Verschlusselement 32 angreifen, während negative Momente der Kurve 44, die unterhalb des mittleren Moments 45 liegen, bei weniger bremsenden oder sogar beschleunigenden Strömungsmomenten entstehen.

Die hier beschriebenen Verläufe für die Momente treten bei stationären Betriebszuständen des Kolbenmotors 1 bzw. der Verschlusseinrichtung 29 auf. Bei instationären oder transienten Betriebszuständen des Kolbenmotors 1 bzw. der Verschlusseinrichtung 29, also z.B. beim Beschleunigen des Kolbenmotors 1 oder bei einem Phasensprung der Verschlusseinrichtung 29, kann das Antriebsmoment deutlich größer und unabhängig von den Strömungsmomenten sein.

Fig. 6 zeigt wieder eine vereinfachte Kurve 44' zur Veranschaulichung des Strömungsmomentenverlaufs am Verschlusselement 32. Bei dieser Konfiguration besitzt das mittlere Moment 45' den Wert 0. In diesem Fall entsprechen negative Strömungsmomente bremsend oder verzögernd wirkenden Strömungskräften am Verschlusselement 32.

Um die Phasenlage zwischen dem Verschlusselement 32 und der Kurbelwelle 34 zu verändern, können nun entsprechend dem hier vorgeschlagenen Betriebsverfahren die am Verschlusselement 32 angreifenden Strömungskräfte bzw. Strömungsmomente genutzt werden, um das Verschlusselement 32 zu beschleunigen bzw. abzubremsen. Ein vorübergehendes, kurzzeitiges Beschleunigen des Verschlusselements 32 führt zu einem Verschieben der Phasenlage des Verschlusselements 32 relativ zur Bezugsgröße bzw. relativ zum Kurbelwellenwinkel der Kurbelwelle 34 nach früh. Bezogen auf 0° KWW sperrt das Verschlusselement 32 dann früher. Im Unterschied dazu führt ein vorübergehendes, kurzzeitiges Abbremsen des Verschlusselements 32 zu einer Verschiebung der Phasenlage relativ zur Bezugsgröße bzw. relativ zum Winkel der Kurbelwelle 34 nach spät. Mit Bezug auf 0° KWW sperrt das Verschlusselement 32 dann später.

In Fig. 6 symbolisiert ein Verlauf 56 eine Vergrößerung des Phasenwinkels, also eine Verstellung der Phasenlage nach spät. Hierzu erfolgt in einem Drehwinkelbereich 57 ein Abbremsen bzw. eine Verzögerung des Verschlusselements 32. Erkennbar liegt dieser Verzögerungsbereich 57 in einem Bereich der Strömungsmomentenkurve 44', in dem bezogen auf das mittlere Moment 45' negative Momente vorliegen. Das bedeutet, dass hier bremsende bzw. verzögernde Strömungskräfte am Verschlusselement 32 angreifen. In der Folge können diese Strömungskräfte bzw. Strömungsmomente zum Verzögern des Verschlusselements 32 ausgenutzt werden. Erkennbar ist diese Verzögerungsphase zeitlich sehr kurz und erstreckt sich nur über wenige Grad KWW, insbesondere über weniger als 30° KWW. In Fig. 6 deutet eine weitere Kurve 58 eine Verkleinerung des Phasenwinkels, also eine Verstellung der Phasenlage nach früh an. Hierzu wird das Verschlusselement 32 in einem Drehwinkelbereich 59 kurzzeitig beschleunigt. Erkennbar wird dieser beschleunigende Drehwinkelbereich 59 bezüglich des Strömungsmomentenverlaufs 44' am Verschlusselement 32 so gelegt, dass dort positive Momente bezüglich des mittleren Moments 45 vorliegen. Das bedeutet, dass hier am Verschlusselement 32 beschleunigende Strömungskräfte bzw. Strömungsmomente wirken. Sie werden hier zum Beschleunigen des Verschlusselements 32 genutzt. Erkennbar erfolgt diese Beschleunigung des Verschlusselements 32 ebenfalls in einem zeitlich kurzen Abschnitt bzw. in einem kleinen Kurbelwinkelbereich. Beispielsweise ist diese Beschleunigungsphase kleiner als 30° KWW.

Das vorgeschlagene Betriebsverfahren nutzt das Schwanken der am Verschlusselement 32 angreifenden Kräfte bzw. Momente zwischen Maximalwerten und Minimalwerten. Ein Beschleunigen des Verschlusselements 32 wird im Bereich der Minimalwerte durchgeführt, da hier die kleinsten Gegenkräfte bzw. Gegenmomente am Verschlusselement 32 angreifen. Insbesondere können die am Verschlusselement 32 angreifenden Kräfte bzw. Momente auch negativ sein, so dass sie selbst eine Beschleunigung des Verschlusselements 32 bewirken. Das Abbremsen des Verschlusselements 32 erfolgt zweckmäßig im Bereich der maximalen Kräfte bzw. Momente, so dass der von den Strömungskräften bzw. Strömungsmomenten erzeugte Drehwiderstand bereits einen wesentlichen Beitrag zum Abbremsen des Verschlusselements 32 leisten kann.

Zweckmäßig erfolgt das Beschleunigen des Verschlusselements 32 in einem Drehwinkelbereich, in dem das Verschlusselement 32 den zugehörigen Strömungsquerschnitt 43 maximal öffnet. Es hat sich gezeigt, dass die am Verschlusselement 32 angreifenden Kräfte in diesem Drehwinkelbereich minimal sind. Im Unterschied dazu erfolgt das vorübergehende Abbremsen des Verschlusselements 32 in einem Drehwinkelbereich, in dem das Verschlusselement 32 den zugehörigen Strömungsquerschnitt 43 maximal sperrt. Es hat sich gezeigt, dass in diesem Drehwinkelbereich die größten, der Bewegung des Verschlusselements entgegenwirkenden Kräfte bzw. Momente erwartet werden können.

Zum Bestimmen der relativen Drehlage des Verschlusselements 32 kann entsprechend Fig. 1 zumindest eine Drehlagenerkennungseinrichtung 50 vorgesehen sein. Im Beispiel der Fig. 1 ist beiden Verschlusselementen 32 bzw. beiden Zusatzventilen 28 je eine Drehlagenerkennungseinrichtung 50 zugeordnet. Bei gekoppelten Verschlusselementen 32, wie bei der in Fig. 2 gezeigten Ausführungsform, reicht eine Drehlagenerkennungseinrichtung 50 aus. Die jeweilige Drehlagenerkennungseinrichtung 50 wirkt mit einer Steuereinrichtung 46 zusammen, die in Fig. 1 ebenfalls vereinfacht dargestellt ist. Die Steuereinrichtung 46 ist so ausgestaltet bzw. programmiert, dass sie sich zum Betreiben der Zusatzventile 28 bzw. der Verschlusseinrichtungen 29 eignet. Insbesondere kann die Steuereinrichtung 46 die vorstehend erläuterten und die nachstehend noch zu erläuternden Betriebsverfahren durchführen.

Insbesondere kann die Steuereinrichtung 46 beim Verändern der Phasenlage der Verschlusselemente 32 die relative Drehlage der Verschlusselemente 32 berücksichtigen, die sie in der jeweiligen Drehlagenerkennungseinrichtung 50 erhält.

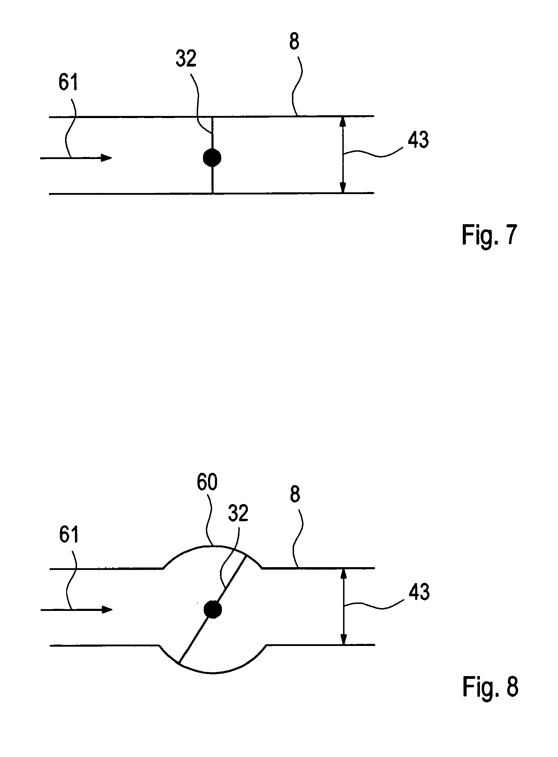

Die Fig. 7 und 8 zeigen zwei grundsätzlich unterschiedliche Bauformen für die Verschlusseinrichtung 29. Dabei zeigt Fig. 7 eine Ausführungsform ohne Vertiefung, während Fig. 8 eine Ausführungsform mit einer Vertiefung 60 zeigt. Besagte Vertiefung 60 ist dabei in eine Wandung des jeweiligen Strömungskanals, z. Bsp. des Frischluftkanal 8, eingearbeitet. In diese Vertiefung 60 taucht das als Klappe ausgestaltete Verschlusselement 32 aufgrund seiner Rotation während eines vorbestimmten, begrenzten Drehwinkelbereichs ein. Dieser Drehwinkelbereich kann bspw. 90° betragen. Die Vertiefung 60 ermöglicht eine Vergrößerung des Schließwinkelbereichs. Während das Verschlusselement 32 bei der in Fig. 7 gezeigten Ausführungsform ohne Vertiefung 60 einen sehr kleinen Schließwinkelbereich aufweist, zeigt die in Fig. 8 wiedergegebenen Ausführungsform mit Vertiefung 60 einen deutlich größeren Schließwinkelbereich. Während in Fig. 7 das Verschlusselement 32 im Wesentlichen nur in der Position senkrecht zu einer durch einen Pfeil 61 angedeuteten Strömungsrichtung den durchströmbaren Querschnitt 43 sperrt, sperrt das in Fig. 8 gezeigte Verschlusselement 32 den durchströmbaren Querschnitt 43 in jeder Drehlage, in der es sich innerhalb der Vertiefungen 60 befindet.

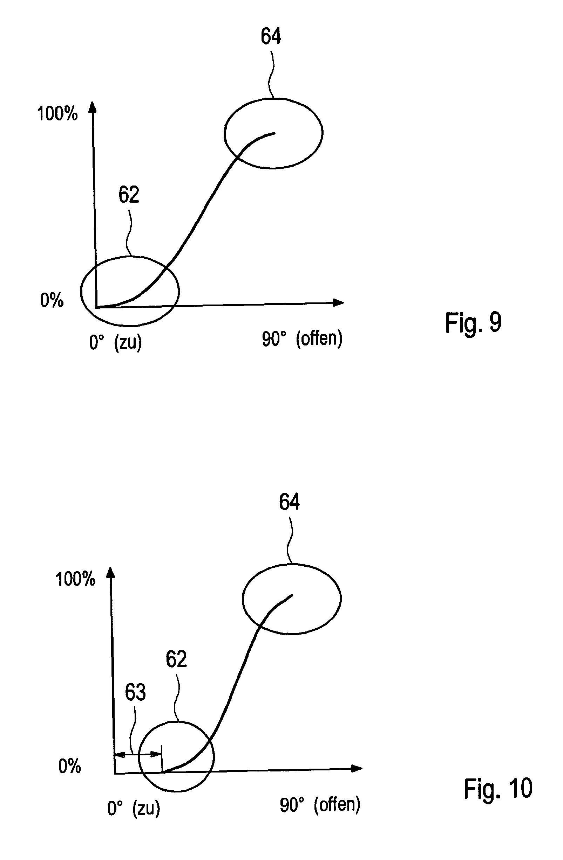

Die Fig. 9 und 10 zeigen nun Diagramme, in denen die Ordinate den freien durchströmbaren Querschnitt 43 von 0% bis 100% angibt, während die Abszisse den Schwenkwinkel des Verschlusselements 32 in einem Bereich von 0° (senkrecht zur Strömungsrichtung 61) bis 90° (parallel zur Strömungsrichtung 61) angibt. Fig. 9 gehört dabei zu der Ausführungsform gemäß Fig. 7 ohne Vertiefung 60, während Fig. 10 zu der Ausführungsform gemäß Fig. 8 mit Vertiefung 60 gehört.

Zweckmäßig kann nun das Einhalten einer gewünschten Phasenlage mit Hilfe der Steuereinrichtung 46 so realisiert werden, dass eine Regelung der Phasenlage nur in wenigstens einem vorbestimmten Drehwinkelbereich erfolgt, während im Übrigen, also in allen anderen Drehwinkelbereichen nur eine Regelung der Drehgeschwindigkeit, also gewissermaßen eine Positionssteuerung durchgeführt wird. Bei einer Verschlusseinrichtung 29, bei welcher der Antrieb 30 durch einen Elektromotor gebildet ist, wird die Drehgeschwindigkeit des Verschlusselements 32 durch die Bestromung des elektrischen Antriebs 30 bestimmt. Durch Verändern der Bestromung kann somit die Drehzahl des Verschlusselements 32 verändert werden.

Um nun bei einem solchen elektrischen Antrieb 30 das Einhalten einer gewünschten Phasenlage bei einer gewünschten Drehgeschwindigkeit zu realisieren, kann die Steuereinrichtung 46 so ausgestaltet sein, dass sie nur in zumindest einem vorbestimmten Drehwinkelbereich des Verschlusselements 32 die Bestromung des elektrischen Antriebs 30 regelt, während sie im Übrigen die Bestromung steuert, also auf einen der gewünschten Drehgeschwindigkeit zugeordneten Wert der Bestromung einstellt. Die Steuerung bzw. Regelung der Bestromung bewirkt eine Regelung der Drehgeschwindigkeit des Verschlusselements 32. Eine derartige Steuerung der Bestromung lässt sich im Unterschied zur Regelung extrem einfach realisieren und ist mit vergleichsweise wenig Energieverbrauch verbunden. Allerdings kann während dieser Geschwindigkeitsregelung die Phasenlage des Verschlusselements 32 variieren, da die Geschwindigkeitsregelung selbst die am Verschlusselement 32 angreifenden Kräfte bzw. Momente nicht direkt ausgleichen kann. Im Unterschied dazu ermöglicht die Regelung der Phasenlagen bzw. die Positionsregelung eine Korrektur der Phasenlage, um die am Verschlusselement 32 aufgrund der daran angreifenden Kräfte bzw. Momente entstehende Phasenabweichung ausgleichen bzw. ausregeln zu können.

In den Fig. 9 und 10 sind Drehwinkelbereiche 62 markiert, in denen es auf die Einhaltung der gewünschten Phasenlage zwischen Verschlusselement 32 und Bezugsgröße bzw. Kurbelwelle 34 ankommt und in denen die Regelung der Phasenlage durchgeführt wird. Dies sind im Beispiel jeweils Drehwinkelbereiche, in denen das Verschlusselement 32 aus seinem Schließwinkelbereich ausfährt. In Fig. 9 ist dies ein an 0° Drehwinkel anschließender Bereich. In Fig. 10 ist dies ein vom 0° Drehwinkel um einen Wert 63 versetzter Bereich von Drehwinkeln. Der Wert 63 definiert dabei den halben Drehwinkelbereich der Vertiefung 60.

In den Fig. 9 und 10 sind außerdem Drehwinkelbereiche 64 markiert, in denen die Einhaltung der Phasenlage unwichtig ist. Die Regelung der Phasenlage erfolgt in den Drehwinkelbereichen 62. In allen anderen Drehwinkeln kann eine Steuerung der Phasenlage ausreichen.

Im Beispiel der Fig. 9 und 10 erfolgt die Regelung der Phasenlage somit am Ende des Schließwinkelbereichs des Verschlusselements 32. Bei einer anderen Ausführungsform kann die Regelung der Phasenlage am Anfang des Schließwinkelbereichs des jeweiligen Verschlusselements 32 erfolgen, wodurch der Beginn des Schließens definiert wird. Ebenso ist eine Ausführungsform möglich, bei welcher sich die Regelung über den gesamten Schließwinkelbereich einschließlich einer Einlaufphase und einer Auslaufphase erstreckt.

Bei einer alternativen Gestaltung der Regelung bzw. Steuerung der Phasenlage kann vorgesehen sein, das Einhalten einer gewünschten Ist-Phasenlage über den gesamten Drehwinkelbereich des Verschlusselements 32 mittels einer Positionsregelung zu realisieren. Allerdings wird bei einer derartigen permanenten Positionsregelung zusätzlich vorgesehen, die Soll-Phasenlage abhängig von den am Verschlusselement 32 angreifenden Strömungskräften und/oder Strömungsmomenten sowie abhängig von der aktuellen Drehwinkellage 32 zu modulieren. Die Modulation der Sollwerte für die Phasenlage berücksichtigt die abhängig von der Drehwinkellage 32 variierenden Kräfte bzw. Momente am Verschlusselement 32 und kann dadurch einen Sollwerteverlauf generieren, der einen minimalen Energiebedarf zur Positionsregelung zur Folge hat. Zweckmäßig kann dabei die Modulation der Sollwerte in Richtung kleiner Soll-Ist-Abweichungen zumindest am Anfang und/oder am Ende eines Schließwinkelbereichs erfolgen, in dem das Verschlusselement 32 den durchströmbaren Querschnitt 43 sperrt, oder über den gesamten Schließwinkelbereich.

Bei einer weiteren alternativen Gestaltung der Regelung bzw. Steuerung der Phasenlage kann vorgesehen sein, das Einhalten einer gewünschten Ist-Phasenlage über den gesamten Drehwinkelbereich des Verschlusselements 32 wie zuvor wieder mittels einer Positionsregelung zu realisieren. Jedoch wird in diesem Fall der permanenten Positionsregelung zusätzlich vorgesehen, einen Bereich zulässiger Abweichungen, die zwischen der Ist-Phasenlage und der Soll-Phasenlage auftreten, jedoch keinen Regeleingriff auslösen, abhängig von den am Verschlusselement 32 angreifenden Strömungskräften und/oder Strömungsmomenten sowie abhängig von der aktuellen Drehwinkellage 32 zu modulieren. Die Modulation des Bereichs zulässiger Soll-Ist-Abweichungen für die Phasenlage berücksichtigt die abhängig von der Drehwinkellage 32 variierenden Kräfte bzw. Momente am Verschlusselement 32 und kann dadurch einen Verlauf für diesen Zulässigkeitsbereich generieren, der einen minimalen Energiebedarf zur Positionsregelung zur Folge hat. Dieser Zulässigkeitsbereich wird dabei so variiert, dass in den Bereichen der Drehbewegung des Verschlusselements 32, die nur geringe Positionsanforderungen genügen müssen, die zulässigen Abweichungen relativ groß sind. Zweckmäßig kann dabei die Modulation des Zulässigkeitsbereichs in Richtung kleiner Soll-Ist-Abweichungen zumindest am Anfang und/oder am Ende eines Schließwinkelbereichs erfolgen, in dem das Verschlusselement 32 den durchströmbaren Querschnitt 43 sperrt, oder über den gesamten Schließwinkelbereich.

Bei einer anderen Gestaltung der Regelung bzw. Steuerung der Phasenlage, die zusätzlich oder alternativ anwendbar ist, kann ebenfalls vorgesehen sein, das Einhalten einer gewünschten Ist-Phasenlage über den gesamten Drehwinkelbereich des Verschlusselements 32 wie zuvor wieder mittels einer Positionsregelung zu realisieren. Jedoch wird in diesem Fall der permanenten Positionsregelung zusätzlich vorgesehen, Parameter der Regelung, also Regelparameter und/oder Parameter eines zur Regelung verwendeten Reglers, also Reglerparameter, welche die Reaktion der Regelung bzw. des Reglers auf eine Soll-Ist-Abweichung bestimmen, abhängig von den am Verschlusselement 32 angreifenden Strömungskräften und/oder Strömungsmomenten sowie abhängig von der aktuellen Drehwinkellage 32 zu modulieren. Die Modulation der Regelparameter bzw. der Reglerparameter berücksichtigt die abhängig von der Drehwinkellage 32 variierenden Kräfte bzw. Momente am Verschlusselement 32 und kann dadurch einen Verlauf für diesen Zulässigkeitsbereich generieren, der einen minimalen Energiebedarf zur Positionsregelung zur Folge hat. Die Regelungsparameter werden dabei so variiert, dass in den Bereichen der Drehbewegung des Verschlusselements 32, die nur geringe Positionsanforderungen genügen müssen, die durchgeführten Regeleingriffe relativ klein bzw. schwach sind. Zweckmäßig kann dabei die Modulation der Regelungsparameter in Richtung kleiner Soll-Ist-Abweichungen zumindest am Anfang und/oder am Ende eines Schließwinkelbereichs erfolgen, in dem das Verschlusselement 32 den durchströmbaren Querschnitt 43 sperrt, oder über den gesamten Schließwinkelbereich.

Obwohl bei den hier vorgestellten Ausführungsformen die Verschlusseinrichtung 29 bevorzugt in einem Frischluftkanal 8 bzw. in einer Frischluftflut 8', 8" zur Anwendung kommt, ist es bei anderen Ausführungsformen ebenso möglich, den Strömungskanal, in dem die Verschlusseinrichtung 29 zur Anwendung kommt, durch einen Abgaskanal 11 bzw. durch eine Abgasflut 11', 11" zu bilden, wobei das jeweilige Verschlusselement 32 dann stromab von Auslassventilen 6 angeordnet ist.

Zusätzlich zu den vorstehend genannten Steuerungsmaßnahmen können weitere Maßnahmen durchgeführt werden, bspw. um die am Verschlusselement 32 angreifenden Kräfte bzw. Momente gezielt zu beeinflussen. Beispielsweise kann durch eine entsprechende Formgebung des als Klappe 32 ausgestalteten Verschlusselements 32 die Stärke des Wechselmoments abgeschwächt werden, das auftritt, wenn die Klappe 32 die Nulllage in der Mittelachse des jeweiligen Strömungskanals überschreitet. Je dünner die Welle 33 der Klappe 32 realisiert werden kann, desto kleiner ist der Umschlagbereich, in dem der starke Momentenwechsel stattfindet. Je dicker die Welle 33 der Klappe 32 wird, desto stärker kann der Umschlagbereich auf größere Winkelwerte verteilt werden, wodurch der starke Momentenwechsel weniger abrupt erfolgt. Desweiteren ist auch eine Konturierung der Klappe 32 denkbar, z. Bsp. nach Art eines Tragflügels, um ähnliche Reduzierungen der störenden Momente zu erzielen. Auch ist es möglich, innerhalb der Zusatzventile 28 anstelle von Klappen 32 andere Ventilglieder zu verwenden, wie z. Bsp. Drehschieber. Auf diese Weise können günstigere Eigenschaften bezüglich der auftretenden, beschleunigenden bzw. verzögernden Störmomente auf die gewünschte Drehbewegung realisiert werden.

## Patentansprüche

1. Verfahren zum Betreiben zumindest eines rotierenden Verschlusselements (32), das in einem Strömungskanal (8) einen durchströmbaren Querschnitt (43) relativ zu einer Bezugsgröße mit einer einstellbaren Phasenlage abwechselnd öffnet und sperrt, bei dem zum Verändern der Phasenlage am Verschlusselement (32) angreifende Strömungskräfte und/oder Strömungsmomente zum vorübergehenden Beschleunigen oder Abbremsen des Verschlusselements (32) genutzt werden.

2. Verfahren nach Anspruch 1,
**dadurch gekennzeichnet,**
- **dass** zum Verstellen der Phasenlage nach früh am Verschlusselement (32) angreifende antreibende Strömungskräfte und/oder Strömungsmomente genutzt werden, und/oder
- **dass** zum Verstellen der Phasenlage nach spät am Verschlusselement (32) angreifende bremsende Strömungskräfte und/oder Strömungsmomente genutzt werden.

3. Verfahren nach Anspruch 1 oder 2,
**dadurch gekennzeichnet,**
- **dass** das vorübergehende Beschleunigen des Verschlusselements (32) in einem Drehwinkelbereich erfolgt, in dem antreibende Strömungskräfte und/oder Strömungsmomente am Verschlusselement (32) angreifen, und/oder
- **dass** das vorübergehende Abbremsen des Verschlusselements (32) in einem Drehwinkelbereich erfolgt, in dem abbremsende Strömungskräfte und/oder Strömungsmomente am Verschlusselement (32) angreifen.

4. Verfahren nach einem der Ansprüche 1 bis 3,
**dadurch gekennzeichnet,**
- **dass** das vorübergehende Beschleunigen des Verschlusselements (32) in einem Drehwinkelbereich erfolgt, in dem das Verschlusselement (32) eine maximale Öffnung des durchströmbaren Querschnitts (43) erzeugt, und/oder
- **dass** das vorübergehende Abbremsen des Verschlusselements (32) in einem Drehwinkelbereich erfolgt, in dem das Verschlusselement (32) eine maximale Sperrung des durchströmbaren Querschnitts (43) erzeugt.

5. Verfahren nach einem der Ansprüche 1 bis 4,
**dadurch gekennzeichnet,**
- **dass** der Strömungskanal zum Zuführen von Frischgas zu einem Kolbenmotor (1) oder zum Abführen von Abgas von einem Kolbenmotor (1) oder zur Abgasrückführung bei einem Kolbenmotor (1) vorgesehen ist,
- **dass** die Bezugsgröße durch den Drehwinkel einer Kurbelwelle (34) des Kolbenmotors (1) definiert ist.

6. Verfahren nach einem der Ansprüche 1 bis 5,
**dadurch gekennzeichnet,**
**dass** eine relative Drehlage des Verschlusselements (32) mittels einer Drehlagenerkennungseinrichtung (50) ermittelt wird und von einer mit der Drehlagenerkennungseinrichtung (50) zusammenwirkenden Steuereinrichtung (46) zum Verändern der Phasenlage berücksichtigt wird.

7. Verfahren nach einem der Ansprüche 1 bis 6,
**dadurch gekennzeichnet,**
**dass** zum Antreiben des Verschlusselements (32) ein Elektromotor verwendet wird, dessen Bestromung zum Einstellen der Drehgeschwindigkeit und/oder des Drehwinkels des Verschlusselements (32) verändert wird.

8. Verfahren nach einem der Ansprüche 1 bis 7
**dadurch gekennzeichnet,**
**dass** das Einhalten einer gewünschten Phasenlage nur in wenigstens einem vorbestimmten Drehwinkelbereich durch eine Regelung des Drehwinkels des Verschlusselements (32) erfolgt und im Übrigen durch eine Regelung der Drehgeschwindigkeit des Verschlusselements (32).

9. Verfahren nach Anspruch 8,
**dadurch gekennzeichnet,**
**dass** die Regelung zumindest am Anfang und/oder am Ende eines Schließwinkelbereichs erfolgt, in dem das Verschlusselement (32) den durchströmbaren Querschnitt (43) sperrt.

10. Verfahren nach einem der Ansprüche 1 bis 7,
**dadurch gekennzeichnet,**
**dass** das Einhalten einer gewünschten Ist-Phasenlage über den gesamten Drehwinkelbereich des Verschlusselements (32) durch eine Regelung erfolgt, wobei eine Soll-Phasenlage abhängig von den am Verschlusselement (32) angreifenden Strömungskräften und/oder Strömungsmomenten und/oder abhängig von der Drehwinkellage des Verschlusselements (32) moduliert wird.

11. Verfahren nach einem der Ansprüche 1 bis 7,
**dadurch gekennzeichnet,**
**dass** das Einhalten einer gewünschten Ist-Phasenlage über den gesamten Drehwinkelbereich des Verschlusselements (32) durch eine Regelung erfolgt, wobei ein Bereich zulässiger Abweichungen von einer Soll-Phasenlage abhängig von den am Verschlusselement (32) angreifenden Strömungskräften und/oder Strömungsmomenten und/oder abhängig von der Drehwinkellage des Verschlusselements (32) moduliert wird.

12. Verfahren nach einem der Ansprüche 1 bis 7,
**dadurch gekennzeichnet,**
**dass** das Einhalten einer gewünschten Ist-Phasenlage über den gesamten Drehwinkelbereich des Verschlusselements (32) durch eine Regelung erfolgt, wobei Regelparameter und/oder Reglerparameter abhängig von den am Verschlusselement (32) angreifenden Strömungskräften und/oder Strömungsmomenten und/oder abhängig von der Drehwinkellage des Verschlusselements (32) moduliert werden.

13. Verfahren nach einem der Ansprüche 10 bis 12,
**dadurch gekennzeichnet,**
**dass** die Modulation zumindest am Anfang und/oder am Ende eines Schließwinkelbereichs erfolgt, in dem das Verschlusselement (32) den durchströmbaren Querschnitt (43) sperrt.

14. Verfahren nach einem der Ansprüche 1 bis 13,
**dadurch gekennzeichnet,**
- **dass** der Strömungskanal ein Frischluftkanal (8) eines Kolbenmotors (1) ist, wobei das Verschlusselement (32) stromauf von Einlassventilen (5) zum Steuern von Gaswechselvorgängen angeordnet ist, und/oder
- **dass** der Strömungskanal ein Abgaskanal (11) eines Kolbenmotors (1) ist, wobei das Verschlusselement (32) stromab von Auslassventilen (6) zum Steuern von Gaswechselvorgängen angeordnet ist, und/oder
- **dass** der Strömungskanal ein Abgasrückführkanal eines Kolbenmotors (1) ist, wobei das Verschlusselement (32) zwischen einer frischluftseitigen Entnahmestelle und einer abgasseitigen Einleitstelle zum Steuern einer Abgasrückführrate angeordnet ist.

15. Verschlusseinrichtung zum Steuern eines Strömungskanals, insbesondere eines Kolbenmotors (1),
- mit mindestens einem im Betrieb rotierend angetriebenen Verschlusselement (32) zum abwechselnden Öffnen und Sperren eines durchströmbaren Querschnitts (43) des Strömungskanals,
- mit einer Steuerung (46) zum Betätigen eines Antriebs (30) des Verschlusselements (32), die so ausgestaltet und/oder programmiert ist, dass sie die Verschlusseinrichtung (29) zum Durchführen eines Betriebsverfahrens nach einem der Ansprüche 1 bis 14 betätigen kann.

## Claims

1. A method for operating at least one rotating closure element (32) which, in a flow channel (8), alternately opens and blocks, relative to a reference variable and with an adjustable phase position, a cross-section (43) through which a flow can pass, wherein for changing the phase position, flow forces and/or flow torques acting on the closure element (32) are utilized for temporarily accelerating or decelerating the closure element (32).

2. The method according to claim 1,
**characterized in**
- **that** for adjusting the phase position towards early, flow forces and/or flow torques acting on and driving the closure element (32) are utilized, and/or
- **that** for adjusting the phase position towards late, flow forces and/or flow torques acting on and decelerating the closure element (32) are utilized.

3. The method according to claim 1 or claim 2,
**characterized in**
- **that** temporarily accelerating the closure element (32) takes place in a rotation angle range in which driving flow forces and/or flow torques act on the closure element (32), and/or
- **that** temporarily decelerating the closure element (32) takes place in a rotation angle range in which decelerating flow forces and/or flow torques act on the closure element (32).

4. The method according to any one of the claims 1 to 3,
**characterized in**
- **that** temporarily accelerating the closure element (32) takes place in a rotation angle range in which the closure element (32) generates a maximum opening of the cross-section (43) through which a flow can pass, and/or
- **that** temporarily decelerating the closure element (32) takes place in a rotation angle range in which the closure element (32) generates a maximum blocking of the cross-section (43) through which a flow can pass.

5. The method according to any one of the claims 1 to 4,
**characterized in**
- **that** the flow channel is provided for supplying fresh air to a piston engine (1), or for discharging exhaust gas from a piston engine (1), or for exhaust gas recirculation in a piston engine (1),
- **that** the reference variable is defined by the rotation angle of a crankshaft (34) of the piston engine (1).

6. The method according to any one of the claims 1 to 5,
**characterized in**
**that** a relative rotational position of the closure element (32) is determined by means of a rotational position detection device (50) and is considered by a control device (46) interacting with the rotational position detection device (50) for changing the phase position.

7. The method according to any one of the claims 1 to 6,
**characterized in**
**that** for driving the closure element (32), an electric motor is used, the energization of which is changed for adjusting the rotational speed and/or the rotation angle of the closure element (32).

8. The method according to any one of the claims 1 to 7,
**characterized in**
**that** maintaining a desired phase position is carried out only in at least one predetermined rotation angle range by a feedback control of the rotation angle of the closure element (32) and apart from that by a feedback control of the rotational speed of the closure element (32).

9. The method according to claim 8,
**characterized in**
**that** the feedback control is carried out at least at the beginning and/or the end of a closing angle range in which the closure element (32) blocks the cross-section (43) through which a flow can pass.

10. The method according to any one of the claims 1 to 7,
**characterized in**
**that** maintaining a desired actual phase position over the entire rotation angle range of the closure element (32) is carried out by a feedback control, wherein a target phase position is modulated depending on the flow forces and/or flow torques acting on the closure element (32) and/or depending on the rotation angle position of the closure element (32).

11. The method according to any one of the claims 1 to 7,
**characterized in**
**that** maintaining a desired actual phase position over the entire rotation angle range of the closure element (32) is carried out by a feedback control, wherein a range of permissible deviations from a target phase position is modulated depending on the flow forces and/or flow torques acting on the closure element (32) and/or depending on the rotation angle position of the closure element (32).

12. The method according to any one of the claims 1 to 7,
**characterized in**
**that** maintaining a desired actual phase position over the entire rotation angle range of the closure element (32) is carried out by a feedback control, wherein feedback control parameters and/or controller parameters are modulated depending on the flow forces and/or flow torques acting on the closure element (32) and/or depending on the rotation angle position of the closure element (32).

13. The method according to any one of the claims 10 to 12,
**characterized in**
**that** the modulation takes place at least at the beginning and/or at the end of a closing angle range in which the closure element (32) blocks the cross-section (43) through which a flow can pass.

14. The method according to any one of the claims 1 to 13,
**characterized in**
- **that** the flow channel is a fresh air channel (8) of a piston engine (1), wherein the closure element (32) is arranged upstream of inlet valves (5) for controlling gas exchange processes, and/or
- **that** the flow channel is an exhaust gas channel (11) of a piston engine (1), wherein the closure element (32) is arranged downstream of outlet valves (6) for controlling gas exchange processes, and/or
- **that** the flow channel is an exhaust gas recirculation channel of a piston engine (1), wherein the closure element (32) is arranged between an extraction point on the fresh air side and an intake point on the exhaust gas side for controlling an exhaust gas recirculation rate.

15. A closure device for controlling a flow channel, in particular of a piston engine (1),
- with at least one closure element (32) which is rotatably driven during operation for alternately opening and blocking a cross-section (43) through which a flow can pass of the flow channel,
- with a control (46) for actuating a drive (30) of the closure element (32), which control is configured and/or programmed in such a manner that it can actuate the closure device (29) for carrying out an operating method according to any one of the claims 1 to 14.

## Revendications

1. Procédé de fonctionnement d'au moins un élément d'obturation rotatif (32), qui ouvre et bloque alternativement dans un canal d'écoulement (8) une section transversale (43) traversée par un écoulement relativement à une grandeur de référence avec une position de phase réglable, dans lequel afin de varier la position de phase les forces d'écoulement agissant sur l'élément d'obturation (32) et/ou les couples d'écoulement sont utilisés pour une accélération ou un freinage temporaire de l'élément d'obturation (32).

2. Procédé selon la revendication 1, **caractérisé en ce que**
- les forces d'écoulement et/ou les couples d'écoulement d'entraînement agissant sur l'élément d'obturation (3) sont utilisés pour décaler prématurément la position de phase, et/ou
- les forces d'écoulement et/ou les couples d'écoulement de freinage agissant sur l'élément d'obturation (32) sont utilisés pour décaler postérieurement la position de phase.

3. Procédé selon les revendications 1 ou 2, **caractérisé en ce que**
- l'accélération temporaire de l'élément d'obturation (32) a lieu dans une plage d'angle de rotation, dans laquelle des forces d'écoulement d'entraînement et/ou des couples d'écoulement agissent sur l'élément d'obturation (32), et/ou
- le freinage temporaire de l'élément d'obturation (32) a lieu dans une plage d'angle de rotation, dans laquelle des forces d'écoulement de freinage et/ou des couples d'écoulement agissent sur l'élément d'obturation (32).

4. Procédé selon une des revendications 1 à 3, **caractérisé en ce que**
- l'accélération temporaire de l'élément d'obturation (32) a lieu dans une plage d'angle de rotation, dans laquelle l'élément d'obturation (32) produit une ouverture maximale de la section transversale (43) traversée par un écoulement, et/ou
- le freinage temporaire de l'élément d'obturation (32) a lieu dans une plage d'angle de rotation, dans laquelle l'élément d'obturation (32) produit un blocage maximal de la section transversale (43) traversée par un écoulement.

5. Procédé selon une des revendications 1 à 4, **caractérisé en ce que**
- le canal d'écoulement est prévu afin d'alimenter du gaz frais dans un moteur à piston (1) ou d'évacuer du gaz d'échappement d'un moteur à piston (1) ou de réintroduire du gaz d'échappement dans un moteur à piston (1),
- la grandeur de référence est définie par l'angle de rotation d'un vilebrequin (34) du moteur à piston (1).

6. Procédé selon une des revendications 1 à 5, **caractérisé en ce que** une position de rotation relative de l'élément d'obturation (32) est déterminée au moyen d'un dispositif de reconnaissance de position de rotation (50) et est pris en compte par un dispositif de commande (46) coopérant avec le dispositif de reconnaissance de position de rotation (50) pour varier la position de phase.

7. Procédé selon une des revendications 1 à 6, **caractérisé en ce que** pour entraîner l'élément d'obturation (32) un moteur électrique est employé, dont l'alimentation en courant est variée afin de régler la vitesse de rotation et/ou l'angle de rotation de l'élément d'obturation (32).

8. Procédé selon une des revendications 1 à 7, **caractérisé en ce que** le maintien d'une position de phase souhaitée a lieu seulement dans au moins une plage d'angle de rotation prédéterminée au moyen d'une régulation de l'angle de rotation de l'élément d'obturation (32) et du reste au moyen d'une régulation de la vitesse de rotation de l'élément d'obturation (32).

9. Procédé selon la revendication 8, **caractérisé en ce que** la régulation a lieu au moins au début et/ou à la fin d'une plage d'angle de fermeture, dans laquelle l'élément d'obturation (32) bloque la section transversale traversée par un écoulement (43).

10. Procédé selon une des revendications 1 à 7, **caractérisé en ce que** le maintien d'une position de phase effective souhaitée a lieu au moyen d'une régulation sur la totalité de la plage d'angle de rotation de l'élément d'obturation (32), dans lequel une position de phase de consigne est modulée en fonction des forces d'écoulement agissant sur l'élément d'obturation (32) et/ou des couples d'écoulement et/ou en fonction de la position d'angle de rotation de l'élément d'obturation (32).

11. Procédé selon une des revendications 1 à 7, **caractérisé en ce que** le maintien d'une position de phase effective souhaitée a lieu au moyen d'une régulation sur la totalité de la plage d'angle de rotation de l'élément d'obturation (32), dans lequel une plage d'écarts autorisés est modulée par une position de phase de consigne en fonction des forces d'écoulement agissant sur l'élément d'obturation (32) et/ou des couples d'écoulement et/ou en fonction de la position d'angle de rotation de l'élément d'obturation (32).

12. Procédé selon une des revendications 1 à 7, **caractérisé en ce que** le maintien d'une position de phase effective souhaitée a lieu au moyen d'une régulation sur la totalité de la plage d'angle de rotation de l'élément d'obturation (32), dans lequel les paramètres de régulation sont modulés en fonction des forces d'écoulement agissant sur l'élément d'obturation (32) et/ou les couples d'écoulement et/ou en fonction de la position d'angle de rotation de l'élément d'obturation (32).

13. Procédé selon une des revendications 10 à 12, **caractérisé en ce que** la modulation a lieu au moins au début et/ou à la fin d'une plage d'angle de fermeture, **en ce que** l'élément d'obturation (32) bloque la section transversale traversée par un écoulement (43).

14. Procédé selon une des revendications 1 à 13, **caractérisé en ce que**
- le canal d'écoulement est un canal d'air frais (8) d'un moteur à piston (1), dans lequel l'élément d'obturation (32) est disposé en amont de soupapes d'admission (5) pour commander des processus d'échange de gaz, et/ou
- le canal d'écoulement est un canal de gaz d'échappement (11) d'un moteur à piston (1), dans lequel l'élément d'obturation (32) est disposé en aval de soupapes d'échappement (6) pour commander des processus d'échange de gaz, et/ou
- le canal d'écoulement est un canal de réintroduction de gaz d'échappement d'un moteur à piston (1), dans lequel l'élément d'obturation (32) est disposé entre un emplacement de prélèvement du côté de l'air frais et un emplacement d'introduction du côté des gaz d'échappement pour commander les taux de réintroduction de gaz d'échappement.

15. Dispositif d'obturation pour commander un canal d'écoulement, notamment d'un moteur à piston (1),
- comportant au moins un élément d'obturation (32) entraîné rotativement en fonctionnement pour ouvrir et bloquer alternativement d'une section transversale traversée par un écoulement (43) du canal d'écoulement,
- comportant une unité de commande (46) pour actionner un entraînement (30) de l'élément d'obturation (32), qui est conçue et/ou programmée de telle sorte qu'elle puisse actionner le dispositif d'obturation (29) afin de mettre en oeuvre un procédé de fonctionnement selon une des revendications 1 à 14.
